# EUROPÄISCHE PATENTANMELDUNG

(11) **EP 2 105 816 A2**
(43) Veröffentlichungstag der Anmeldung: **30.09.2009**
(21) Anmeldenummer: 09004229.2
(22) Anmeldetag: 25.03.2009
(51) Int. Cl.: G05B 19/418

(54) **Fahrerloses Transportsystem zum Transport, Aufnehmen und Absetzen von Lasten**

(30) Priorität: 26.03.2008 DE 102008015779
(71) Anmelder: FPT Systems GmbH, 88279 Amtzell (DE)
(72) Erfinder: Gläss, Harald, 88281 Schlier/Erbisreute (DE)
(74) Vertreter: Riebling, Peter

(57) **Zusammenfassung**

Fahrerloses Transportsystem zum Transport, Aufnehmen und Absetzen von Lasten, bestehend aus einem Fahrgehäuse mit einer oder mehreren passiven Lenkeinheiten und einer oder mehreren aktiv angetriebenen Fahr-Lenkeinheiten sowie mindestens mit einer Hubeinheit, die geeignet ist, Paletten mit darauf angeordneter Last aufzunehmen und abzusetzen, sowie mit mindestens einem Steuerschrank, in dem mindestens die Steuerung für die Fahr-Lenkeinheit und die Hubeinheit angeordnet ist, **dadurch gekennzeichnet, dass** die dem Steuerschrank zugeordnete Steuerung zur Ansteuerung eines Knickarm-Roboters ausgelegt ist und geeignet ist, mindestens die Fahr- und Lenkeinheit und die Hubeinheit des fahrerlosen Transportsystems zu steuern.

## Beschreibung

Die Erfindung betrifft ein fahrerloses Transportsystem zum Transport, Aufnehmen und Absetzen von Lasten nach dem Oberbegriff des Patentanspruchs 1.

Ein derartiges fahrerloses Transportsystem ist beispielsweise mit dem Gegenstand der DE 34 45 792 C2 bekannt geworden. Es ist hierbei allgemein bekannt, bei der Fließbandfertigung von Massenprodukten den einzelnen Arbeitsplätzen die benötigten Komponenten jeweils über eine Stau- und Förderstrecke zuzuführen, die an einem Ende beladen wird und am anderen Ende eine Entladestation in der Nähe des Montageplatzes aufweist. Der Lasttransport erfolgt hierbei mittels des genannten fahrerlosen Transportsystems. Die dort gezeigten, führerlosen Fahrzeuge fahren mit einer Leitwegsteuerung einen bestimmten Förderweg entlang und die aufzunehmenden und abzugebenden Lasten sind auf Lastträgern (Paletten) gelagert, die von dem Fahrzeug aufgenommen und an bestimmten Stellen des Förderweges wieder abgesetzt werden. Bei der Verwirklichung eines solchen fahrerlosen Transportsystems hat es sich jedoch als außerordentlich schwierig herausgestellt, die entsprechenden Hubbewegungen und Absetzbewegungen am Fahrzeug in Verbindung mit der integrierten Leitwerksteuerung zu verbinden. Es entstand hierdurch ein außerordentlich hoher Programmieraufwand. Ferner ist aus der DE 44 12 554 A1 eine automatische Beschickungs- und Entnahmevorrichtung für Hochregallager bekannt, bei der das Regalbedien-Fahrzeug aus einem im Bereich einer Hubschiene verfahrbaren Manipulator besteht, der über die gesamte Regallänge horizontal verfahrbar ist und einen Greifarm besitzt, der in Richtung zu und von den zu beschickenden Regalfächern verschieblich und horizontal schwenkbar ausgebildet ist.

Auch hier besteht das Problem, dass man den Fahrantrieb, der schienengebunden ausgebildet ist, mit den Hub- und Kreisbewegungen des Manipulators koordinieren muss. Standardprogramme, zur Integration der beiden genannten Programmieraufgaben (Ansteuerung des Fahrantriebes in Verbindung mit Ansteuerung des Hubantriebes) sind nicht bekannt.

Mit dem Gegenstand der DE 10 2004 056 861 A1 ist ein Verfahren und eine Vorrichtung zum Regeln und Steuern von Manipulatoren bekannt geworden, wobei insbesondere Knickarm-Roboter programmiert werden sollen. Es handelt sich hierbei um einen Industrieroboter nach EN ISO 8373, der insbesondere mit drei oder mehr programmierbaren Achsen ausgestattet ist.

Diese Druckschrift offenbart jedoch nicht, wie die Programmierung eines Knickarm-Roboters auf die Programmierung eines selbstfahrenden Transportsystems übertragen werden könnte.

Der Erfindung liegt deshalb die Aufgabe zugrunde, ein fahrerloses Transportsystem der eingangs genannten Art so weiterzubilden, dass die Programmierung des Fahr-, Lenk- und Hubantriebes auf besonders einfache Weise möglich ist.

Zur Lösung der gestellten Aufgabe ist die Erfindung durch die technische Lehre des Anspruches 1 gekennzeichnet.

Wesentliches Merkmal der vorliegenden Erfindung ist, dass in nicht naheliegender Weise erkannt wurde, dass die für die Programmierung eines (feststehenden), d.h. eines nicht verfahrbaren (Knickarm-Roboters) mit mehreren programmierbaren Achsen auch geeignet ist, ein solches fahrerloses Transportsystem auf besonders einfache Weise zu programmieren.

Wie die Programmierung eines bekannten Knickarm-Roboters erfolgt, ergibt sich beispielsweise aus dem Gegenstand der DE 10 2004 056 861 A1 oder der DE 10 2005 058 867 A1.

Ferner wird insbesondere auf die DE 10 2006 007 623 A1 verwiesen. Alle Druckschriften und deren Offenbarungsinhalt sollen vollinhaltlich zum Gegenstand der vorliegenden Erfindung gehören.

Eine Bewegungssteuerung für einen bekannten Knickarm-Roboter besteht im Wesentlichen aus einem Industrie-PC, der beispielsweise mit dem bekannten Betriebssystem Windows arbeitet. Der diesem PC zugeordnete Interpreter/Compiler arbeitet auf eine Bewegungsplanung, was bedeutet, dass eine bestimmte Landkarte der CPU zugeordnet ist und hieraus die Bewegungsplanung der einzelnen Knick- und Drehachsen des Roboters berechnet werden. Es ergibt sich daraus ein geometrisches Bahn- und Geschwindigkeitsprofil für die einzelnen drei oder mehreren programmierbaren Achsen.

Nach einer entsprechenden Interpolation der geometrischen Bahn- und Geschwindigkeitsprofile werden hieraus die Achswinkel und die Stromvorgaben für die entsprechenden Antriebsmotoren ermittelt und der Antriebsstützstelle zugeleitet. In Verbindung mit einer zugeordneten Regelung und entsprechenden Sensoren erfolgt somit der automatisch gesteuerte Bewegungsablauf der einzelnen Dreh- und Knickachsen des Roboters.

Die hierfür erarbeitete Software wird als Robotersteuerung KR C von der Firma Kuka in weitem Umfang vertrieben.

Gegenstand der Erfindung ist nun, eine solche Standard-Programmierschnittstelle auf fahrerlose Transportsysteme zu übertragen. Hierbei ist wichtig, dass statt des Antriebes der Knick- und Drehachsen eines Knickarm-Roboters nun die einzelnen Lenkmotoren des fahrerlosen Transportsystems und zusätzlich die ein oder mehreren Fahrmotoren und darüber hinaus auch noch der Hubmotor dieses Transportsystems mit der gleichen Software angesteuert werden.

Hierzu ist es erforderlich, die Softwarebefehle für den Knickarm-Roboter zur Ansteuerung der Dreh- und Fahrbewegungen der einzelnen Knick- und Drehachsen so zu ändern, dass stattdessen ein oder mehrere Lenkmotoren eines fahrerlosen Transportsystems, zusätzlich zu dem Fahrermotor und zusätzlich zu dem Hubmotor angesteuert werden können.

Von besonderem Vorteil ist, dass auch das Eingabedisplay für einen herkömmlichen Knickarm-Roboter mit der oben genannten Robotersteuerung unmittelbar zur Programmierung des fahrerlosen Transportsystems verwendet werden kann.

Damit bezieht sich die Erfindung auf ein fahrerloses Transportsystem, welches mit einem (mitfahrenden) Steuerschrank ausgerüstet ist, welcher Steuerschrank in identischer Form zur Ansteuerung eines (feststehenden) Knickarm-Roboters verwendet wird.

Ferner ist wesentlich bei der vorliegenden Erfindung, dass dem Steuerschrank auch das Eingabedisplay mit der Mensch-Maschine-Schnittstelle zugeordnet ist, wie es zur Programmierung von Knickarm-Robotern verwendet wird.

Auf diese Weise ist es deshalb ohne Weiteres möglich, jeden selbstfahrenden Lastenträger, der einen solchen Steuerschrank trägt und mit einem solchen Display ausgerüstet ist, eigenständig zu programmieren und entlang eines vorgegebenen Fahrweges fahren zu lassen.

Im folgenden Ausführungsbeispiel wird die Anwendung der erfindungsgemäßen Knickarm-Robotersteuerung für ein fahrerloses Transportsystem mit insgesamt vier Lenkmotoren beschrieben, wobei zwei Fahrmotoren vorhanden sind und ein einziger Hubmotor mit Kettenantrieb.

Hierauf ist die Erfindung selbstverständlich nicht beschränkt. Es wird deshalb nur der einfacheren Beschreibung wegen von der Programmierung von vier Lenkmotoren, zwei Fahrmotoren und einem Hubmotor ausgegangen.

Selbstverständlich umfasst die vorliegende Erfindung auch andere Konfigurationen, wie z. B. die Ansteuerung von nur zwei Lenkmotoren, in Verbindung mit einem Fahrmotor und einem Hubmotor oder dergleichen Kombinationen untereinander mehr.

Wichtig ist jedenfalls, dass das fahrerlose Transportsystem (FTS) eine Programmierschnittstelle zur Programmierung der Lenkung (hier bestehend aus vier Lenkmotoren), eine Programmierschnittstelle zur Programmierung des Antriebes (hier für zwei Fahrmotoren) und eine Programmierschnittstelle zur Programmierung der Hubeinheit (hier bestehend aus einem Hubmotor mit einem Kettenantrieb) aufweist.

Die genannte PC-basierte Robotersteuerung hat den Vorteil, dass standardisierte Hard- und Softwarelösungen mit Windows als Betriebssystem-Plattform verwendet werden können und der Anwender automatisch von den Weiterentwicklungen der PC-Technologie profitiert. Ebenso ist die erfindungsgemäße PC-basierte Robotersteuerung durch ihre Offenheit und Netzwerkfähigkeit gekennzeichnet. Es werden demzufolge Standards in der Soft- und Hardware genutzt und eine grafische Bedienoberfläche auf der Basis von Microsoft Windows verwendet. Dadurch ergibt sich ein wesentlicher Preisvorteil gegenüber Sonderentwicklungen.

Kern der PC-basierten Robotersteuerung bildet ein handelsübliches PC-Motherboard mit einer Pentium-CPU. Auf dieser Ein-Prozessor-Lösung laufen gleichzeitig zwei Betriebssysteme, nämlich Windows und VxWorks. Das Echtzeitbetriebssystem Vx-Works übernimmt dabei die Kommandoverarbeitungen, die Bahnansteuerungen und die Sensoren-Integrationen, während unter Windows die Bedienung, Anzeige und Datenverarbeitung laufen. Getriggert werden die beiden Betriebssysteme durch den RealTimeAccelerator, der auf der sogenannten MFC-Karte sitzt. Dieser Chip erteilt bei entsprechend anstehenden Interrupts die höhere Priorität immer dem Echtzeitbetriebssystem VxWorks, um die Echtzeitfähigkeit der Steuerung zu garantieren. Neben dem Echtzeit-Chip auf der MFC-Karte befindet sich hier auch noch eine Ansteuerungselektronik für die Motoren, die sogenannte DSE AT als digitale Servo-Elektronik. Sie enthält den Lageregelkreis, über den die Sollinformationen laufen, die Bahn berechnet wird und der Regelkreis abläuft. Die MFC-Karte verbindet zudem die 6-D-Mouse und die Tastatur des Bedienpanels mit dem Rechner.

Als Standard-Prozessschnittstelle verfügt der Rechnerschrank, der unmittelbar mit dem fahrerlosen Transportsystem mitfährt, auch über mehrere digitale Eingabe/Ausgabeanschlüsse, die direkt auf der MFC-Karte sitzen. Weitere Kommunikationswege bietet eine Ethernet-Verbindung und ein standardmäßig integrierter CAN-Bus unter dem Protokoll DeviceNet, sowie optional andere Bus-Systeme, wie z. B. Interbus oder Profibus. Vorteil der Bedieneroberfläche, die auf dem Eingabe-Bildschirm dargestellt wird ist, dass der eigentliche Roboterprozess, wie auch weiterführende Abläufe visualisiert werden können. Der Bediener kann dadurch direkt vor Ort über das Eingabeterminal die komplette Funktionalität rund um das fahrerlose Transportsystem erfassen. Damit liegt der Vorteil der Verwendung der angegebenen Software in Verbindung mit dem Eingabe-Bildschirm darin, dass sich bei einem fahrerlosen Transportsystem die Bedienung einer kompletten Anlage in einer übergeordneten Bedien- und Beobachtungsstation realisieren lässt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert die perspektivische Darstellung eines fahrerlosen Transportsystems (FTS)
- Figur 2:: schematisiert die Draufsicht auf das FTS nach Figur 1
- Figur 3:: die Darstellung des mit dem FTS mitfahrenden Steuerschranks und des Eingabeterminals
- Figur 4:: schematisiert ein Blockschaltbild der hardware- und softwaremäßigen Anbindung FTS
- Figur 5:: schematisiert die Verwendung unterschiedlicher Programmier- Werkzeuge und deren Schnittstellung in Verbindung mit der erfindungsgemäßen Programmierung des FTS

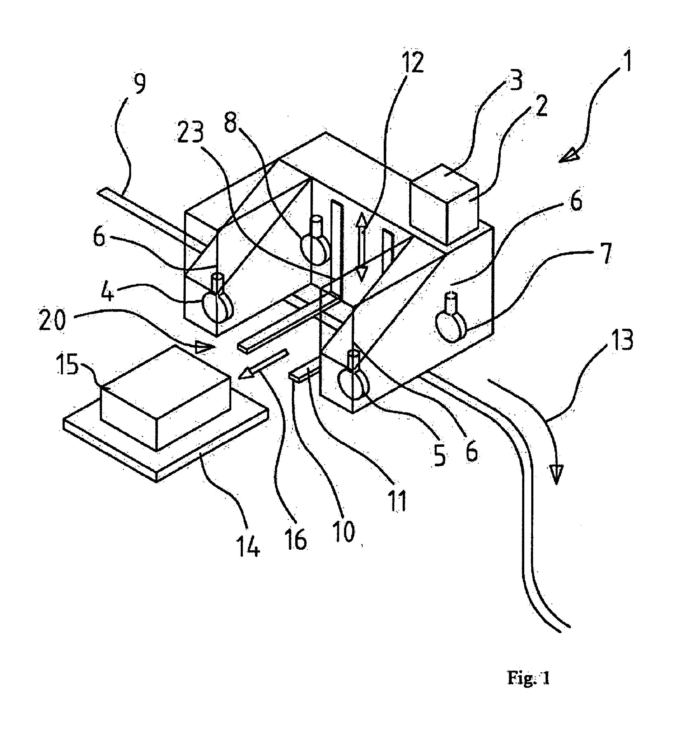

Das fahrerlose Transportsystem (FTS) 1 besteht im Ausführungsbeispiel nach Figur 1 aus einem selbstfahrenden Fahrwagen, auf dem ein Steuerschrank 2 angeordnet ist, der mit einem Eingabe-Bildschirm 3 (Eingabeterminal) verbunden ist. Er weist im Ausführungsbeispiel zwei passive Lenkeinheiten 4, 5 auf, deren Lenkräder nicht angetrieben sind. Jeder Lenkeinheit ist jedoch ein zugeordneter Lenkmotor zugeordnet.

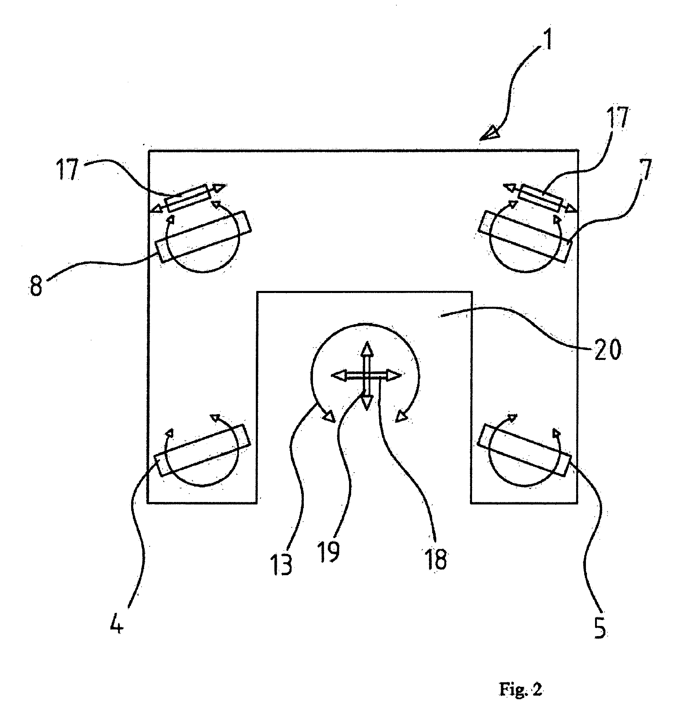

Ferner sind gemäß Figur 2 zwei Fahr-Lenkeinheiten 7, 8 vorgesehen, denen jeweils ein Lenkmotor und zusätzlich ein Fahrmotor zugeordnet ist.

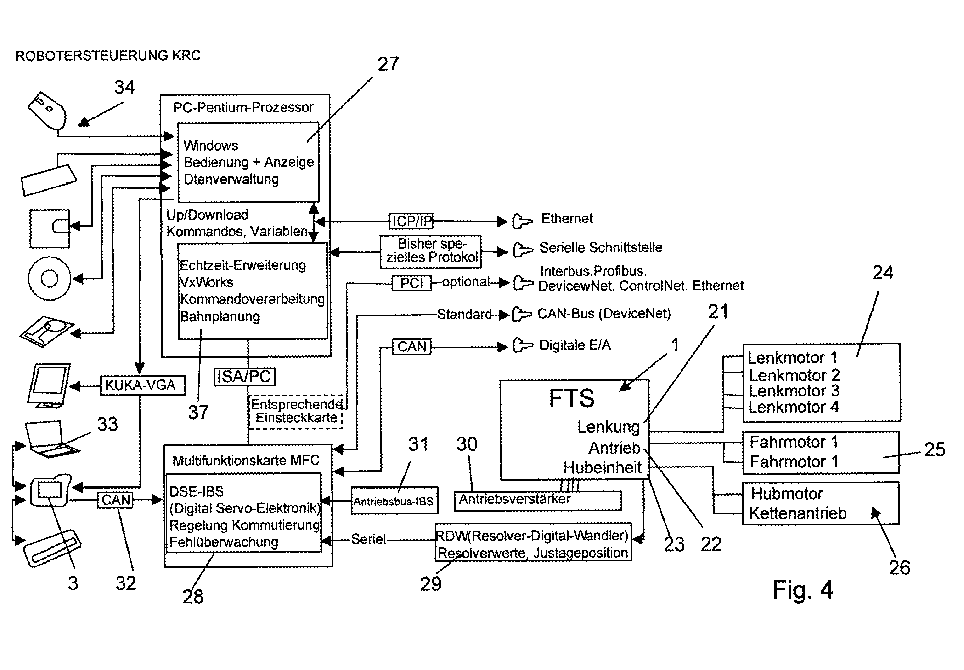

Insgesamt gibt es somit vier Lenkmotoren und zwei Fahrmotoren, die in einer Lenksteuerung 24 zusammengefasst sind (s. Figur 4).

Die Lenkmotoren können deshalb die Lenk- oder Antriebsräder jeweils um die vertikale Drehachse 6 steuerbar verdrehen und somit einen definierten Lenkanschlag erzeugen.

Im Übrigen wird es gemäß Figur 2 bevorzugt, wenn die beiden Fahrmotoren, die den Fahr-Lenkeinheiten 7, 8 zugeordnet sind, nebeneinander auf dem Basisschenkel des U-Profils der Fahreinheit angeordnet sind, während die passiven Lenkeinheiten 4, 5 an den Vorderseiten der jeweiligen U-Schenkel angeordnet sind. Auf diese Weise bildet das Transportsystem eine zentrale Aufnahmeöffnung 20, die nach vorne hin offen ist und in deren Bereich eine Hubeinheit 23 angeordnet ist. Mit nicht näher dargestellten Kameras oder anderen Sensoren kann sie deshalb einer optisch erkennbaren Steuerspur 9 entlang verfahren. Statt einer optisch erkennbaren Steuerspur 9 können jedoch auch induktive Steuerspuren oder andere Steuerspuren auf dem Boden einer Fabrikhalle ausgebracht sein. Im gezeigten Ausführungsbeispiel verfährt das FTS 1 beispielsweise in Pfeilrichtung 13 entlang der Steuerspur 9.

Wichtig ist, dass durch die Verwendung von insgesamt vier Lenkmotoren und zwei Fahrmotoren ein Drehen auf der Stelle möglich ist, so wie dies anhand der Pfeilrichtungen 18, 19, 13 in Figur 2 dargestellt ist.

Alle Lenkeinheiten sind um 360° drehbar und die Fahrmotoren können eine Geschwindigkeit von 1,6 m/s erreichen.

Die Hubeinheit 23 besteht im Wesentlichen aus einer Stapelgabel 10, die in den Pfeilrichtungen 12 heb- und senkbar im Bereich der U-förmigen Aufnahmeöffnung 20 ausgebildet ist. Die Stapelgabel 10 weist hierbei die Gabelzinken auf, auf deren Oberfläche jeweils eine Antriebskette 11 drehend angetrieben angeordnet ist.

Auf diese Weise ist es möglich, dass das FTS 1 in Pfeilrichtung 16 mit abgesenkter Stapelgabel 10 unter eine Palette 14 fährt, auf der eine zu befördernde Last 15 angeordnet ist. Durch Antrieb der jeweiligen Antriebsketten 11 wird somit die Palette 14 in Gegenrichtung zur eingezeichneten Pfeilrichtung 16 auf die Stapelgabel 10 gezogen und somit in den Bereich der Aufnahmeöffnung 20.

Sobald die Palette 14 aufgenommen ist, kann das FTS 1 beispielweise in Pfeilrichtung 13 weiterverfahren und eine entsprechende Abladestation ansteuern.

Die Fahrmotoren sind gemäß Figur 2 durch jeweils einen getrennt steuerbaren Antriebsmotor 17 angesteuert und somit kann das FTS 1 in beliebigen Pfeilrichtungen 18, 19, sowie in Drehrichtung 13 im Bereich der Steuerspur 9 liegende An- und Abladestationen anfahren.

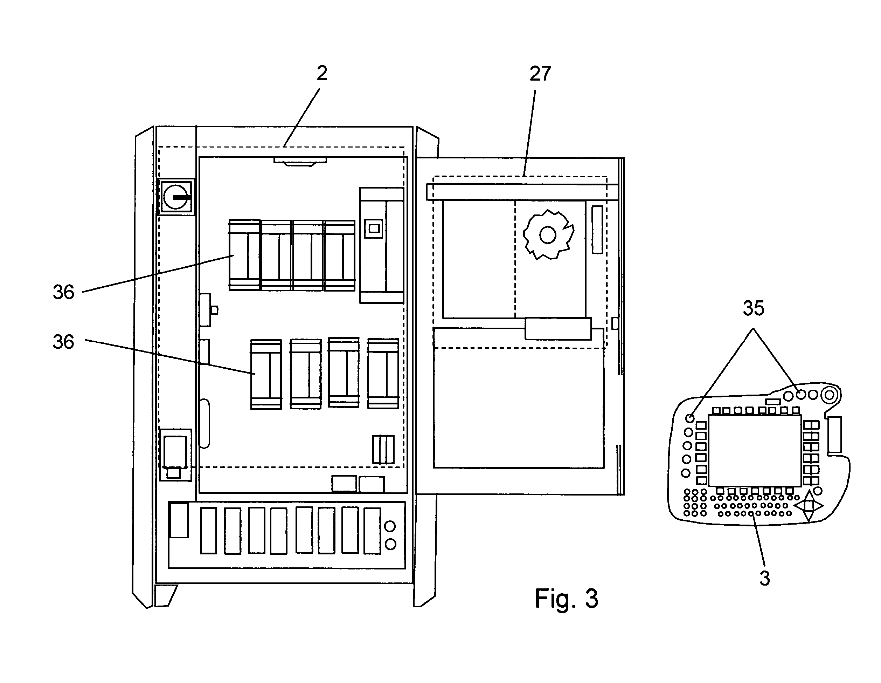

Die Figur 3 zeigt hierbei den geöffneten, mit dem FTS 1 mitfahrenden Steuerschrank 2, in dem eine Reihe von SPS-Steuereinheiten 36 angeordnet sind. Das Kernstück der Anlage bildet der an der Türinnenseite befestigte Prozessor 27 und auf der Außenseite des Steuerschrankes ist der in Figur 3 dargestellte Eingabe-Bildschirm 3 mit einer Vielzahl von Programmiertasten 35 befestigt.

Wichtig ist gemäß Figur 4, dass die dem FTS 1 zugeordnete Lenkung 21 mit der Lenksteuerung 24 bestehend aus den vier Lenkmotoren, in Verbindung mit dem Antrieb 22 und den dazugehörenden Fahrmotoren und der Fahrmotorsteuerung 25, sowie in Verbindung mit der Hubeinheit 23 und der Hubmotorensteuerung 26 von einem PC-basierten Prozessor 27 ansteuerbar sind.

Figur 4 zeigt, dass eine Vielzahl von Peripheriegeräten 34 die Eingänge des Prozessors 27 bilden, wobei derartige Peripheriegeräte Eingabemedien und Ausgabemedien sind.

Der PC-Prozessor 27 wirkt auf ein Echtzeit-Betriebssystem VxWorks, welches als Echtzeit-Modul 37 in Figur 4 dargestellt ist.

Über eine Vielzahl von Bus-Systemen (s. in Figur 4 rechts oben) können entsprechende Daten ein- und ausgelesen werden.

Die Multifunktionskarte MFC enthält die Hardware 28 für die digitale Servo-Elektronik, die Regelung, Kommutierung und Fehlüberwachung der unterschiedlichen Steuereinheiten 24, 25 und 26.

Über einen Antriebsbus 31 werden die Ausgangssignale der Hardware 28 und über einen zugeordneten Antriebsverstärker 30 dem FTS 1 zugeführt.

Die Rückmeldung der im FTS angeordneten Sensoren für die Erfassung der Lenk-und der Fahrbewegung erfolgt über die Sensoren 29, die über einen seriellen Bus wiederum mit der Hardware 28 verbunden sind.

Die Figur 4 zeigt ferner, dass die Programmierung unmittelbar über den Eingabe-Bildschirm 3 erfolgt, der über einen CAN-Bus 32 mit der Multifunktionskarte MFC verbunden ist.

Gleichzeitig ist der Eingabe-Bildschirm 3 mit einem Laptop 33 verbunden und noch mit zusätzlichen Eingabe- und Ausgabemedien. Selbstverständlich ist er auch mit dem Prozessor 27 selbst verbunden, um eine übergeordnete Steuerung zu erhalten.

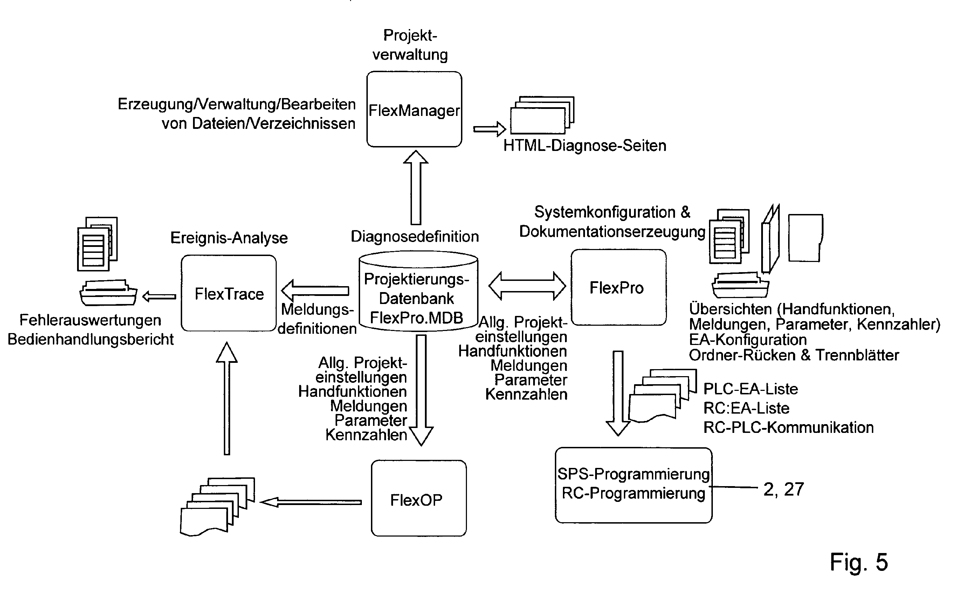

Die Figur 5 zeigt verschiedene Werkzeuge, die zur einfachen Programmierung des FTS verwendet werden.

Die Projektverwaltung erfolgt hierbei über das Programm FlexManager, mit dem die Erzeugung, Verwaltung und Bearbeitung von Dateien und Verzeichnissen gegeben ist.

Zentraler Bestandteil der Programmierung ist die Projektierungs-Datenbank mit der eine Ereignis-Analyse möglich ist, mit der Fehlerauswertungen und eine Bedienhandlungsbericht möglich ist.

Ausgehend von der Projektierungs-Datenbank können so die allgemeinen Projekteinstellungen, die Handfunktionen, Meldungen, Parameter und Kennzahlen programmiert werden. Diese eigentliche Systemkonfiguration erfolgt mit dem Werkzeug FlexPro, welches seinerseits auf die erfindungsgemäße SPS-Programmierung und RC-Programmierung 2,27 des FTS 1 einwirkt.

Aus der hier vorgestellten Übersicht der Programmierungssoftware für einen Knickarm-Roboter ergibt sich der Vorteil der vorliegenden Erfindung dergestalt, dass es nun damit erstmals möglich ist, die Lenkung 21, den Antrieb 22 und die Hubeinheit 23 mit Befehlssätzen zu steuern, wie sie üblicherweise einem (feststehenden) Industrieroboter mit seinen Knick- und Drehachsen zugeordnet werden.

Es bedurfte daher eines Eingriffs in die Hardware 28 in Verbindung mit der Kommandoverarbeitung und der Bahnplanung im Bereich des Echtzeit-Moduls 37, um anstatt der Knick- und Drehantriebe für einen Knickarm-Roboter nun die Lenkmotoren einer Lenksteuerung 24, die Fahrmotoren einer Fahrmotorsteuerung 25 und den Hubmotor einer Hubmotorsteuerung 26 anzusteuern.

### Zeichnungslegende

- 1: FTS fahrerloses Transportsystem
- 2: Steuerschrank
- 3: Eingabe-Bildschirm
- 4: Lenkeinheit
- 5: Lenkeinheit
- 6: Drehachse
- 7: Fahr-Lenkeinheit
- 8: Fahr-Lenkeinheit
- 9: Steuerspur
- 10: Stapelgabel
- 11: Antriebskette
- 12: Pfeilrichtung
- 13: Pfeilrichtung
- 14: Palette
- 15: Last
- 16: Pfeilrichtung
- 17: Antriebsmotor
- 18: Pfeilrichtung
- 19: Pfeilrichtung
- 20: Aufnahmeöffnung
- 21: Lenkung
- 22: Antrieb
- 23: Hubeinheit
- 24: Lenksteuerung
- 25: Fahrmotorsteuerung
- 26: Hubmotorsteuerung
- 27: Prozessor
- 28: Hardware
- 29: Sensoren
- 30: Antriebsverstärker
- 31: Antriebsbus
- 32: CAN-Bus
- 33: Laptop
- 34: Peripheriegeräte
- 35: Programmiertasten
- 36: SPS-Steuereinheiten
- 37: Echtzeit-Modul

## Patentansprüche

1. Fahrerloses Transportsystem (1) zum Transport, Aufnehmen und Absetzen von Lasten (15) bestehend aus einem Fahrgehäuse mit einer oder mehreren passiven Lenkeinheiten (4, 5) und einer oder mehreren aktiv angetriebenen Fahr-Lenkeinheiten (7, 8), sowie mindestens mit einer Hubeinheit (23), die geeignet ist, Paletten (14) mit darauf angeordneter Last (15) aufzunehmen und abzusetzen, sowie mit mindestens einem Steuerschrank (2), in dem mindestens die Steuerung für die Fahr-Lenkeinheit (4, 5) und die Hubeinheit (23) angeordnet ist, **dadurch gekennzeichnet, dass** die dem Steuerschrank (2) zugeordnete Steuerung zur Ansteuerung eines Knickarm-Roboters ausgelegt ist und geeignet ist mindestens die Fahr- und Lenkeinheit (4, 5) und die Hubeinheit (23) des fahrerlosen Transportsystems (1) zu steuern.

2. Verwendung einer Steuerung für einen Knickarm-Roboter, die geeignet ist, die unterschiedlichen Knick- und Drehachsen des Knickarm-Roboters anzusteuern, **dadurch gekennzeichnet, dass** das die Steuerung zur Ansteuerung der Fahr-Lenkeinheiten (4, 5) und der Hubeinheit (23) eines fahrerlosen Transportsystems (1) verwendet wird.

3. Fahrerloses Transportsystem nach Anspruch 1 oder 2, **dadurch gekennzeichnet, dass** ein PC-basierter Prozessor (27) mit einem Softwareteil (37) zusammen wirkt, das seinerseits auf einen Hardware-Teil (28) mit digitaler Server-Elektronik, Regelung und Kommutierung einwirkt und dass der Hardwareteil (28) mit einem Antriebsverstärker (30) zur Ansteuerung der Lenkung (21), der Antriebe (22) und der Hubeinheit (23) verbunden ist.

4. Fahrerloses Transportsystem nach einem der Ansprüche 1 bis 3, **dadurch gekennzeichnet, dass** die Steuerung eines Knickarm-Roboters bestehend aus den Bausteinen Interpreter/Compiler, Bewegungsplanung, Interpolation, Antriebsschnittstelle und Regelung für die Antriebsmotoren zur Steuerung des Fahrerlosen Transportsystem dergestalt modifiziert ist, dass die Fahr- und Lenkbewegung des Transportsystems (1) auf einer Fahrebene und die Steuerung der Hubeinheit (23) als Bewegungsplanung des Knickarm-Roboters programmiert wird

5. Fahrerloses Transportsystem nach einem der Ansprüche 1 bis 4, **dadurch gekennzeichnet, dass** am Fahrgehäuse des fahrerlosen Transportsystems (1) der Steuerschrank (2) und das Eingabe-Terminal (3) des Knickarm-Roboters angeordnet ist.
